# EUROPEAN PATENT APPLICATION

(11) **EP 0 566 182 A1**
(43) Date of publication of application: **20.10.1993**
(21) Application number: 93200991.3
(22) Date of filing: 05.04.1993
(51) Int. Cl.: G01G 19/08, G01G 23/00, G01G 21/18

(54) **Device for adjustably supporting a weighing element**

(30) Priority: 08.04.1992 NL 9200663
(71) Applicant: METTLER-TOLEDO B.V., NL-4004 JK Tiel (NL)
(72) Inventor: van der Velden, Henricus Franciscus Maria, NL-5344 BK Oss (NL)
(74) Representative: de Bruijn, Leendert C.

(57) **Abstract**

A device is provided for adjustably supporting a weighing element. To this end the device is provided with a body (4) which has a convex-shaped supporting surface (5) and with a body (6) provided with a supporting surface which has a recess (7). In the said device said bodies (4, 6) are movably supported on one another by means of their supporting surfaces. Preferably an essentially linear contact is produced between said two bodies (4, 6). In addition, stops (10) can be fitted to restrict the extent to which the bodies (4, 6) are able to move with respect to one another.

## Description

The invention relates to a device for adjustably supporting a weighing element.

For accurate weighing it is extremely important that the weighing direction is parallel to the direction of the factor to be weighed. The requirement is, therefore, that the weighing element is adjustably supported for adaptation to the prevailing conditions. Netherlands patent 184 104 discloses mounting of the weighing element on a vehicle in suspension elements to enable loads to be weighed precisely even when the vehicle is on an incline. The disadvantage, however, is that the weighing element together with its suspension takes up a considerable height, which, for example, is a drawback if the weighing element is installed in a tailboard at the rear of a vehicle. One solution to this problem is proposed by Netherlands patent application 9 000 359, in which use is made of weighing elements which rely on bending under load. However, this arrangement still involves a suspension which takes up a relatively large amount of space, whilst the functioning thereof is restricted to the vehicle being out of true by no more than 5 %. If the vehicle is leaning a lateral force can be exerted on the measuring cell, as a result of which a measurement error is obtained. Moreover, the construction of the weighing element with its suspension is fairly complex as a consequence of the use of a twin gimbal hinge and the type of weighing element that measures by bending.

The aim of the present invention is to provide an efficient adjustable support for a weighing element, which support is of simple construction, has a low space requirement, is reliable and trouble-free in operation and has a wide operating range with a relatively large permissible lean.

To this end the invention provides a device for adjustably supporting a weighing element, said device being provided with a body which has a convex-shaped supporting surface and with a body provided with a supporting surface which has a recess, said bodies being slidably supported on one another by means of the supporting surfaces and making contact with one another along a single peripheral line, the weighing element being installed on one of the bodies away from the boundary surface between said bodies and the other of the said bodies being connected to a support. As a result of the linear contact between the two bodies, the friction produced is so low that the measurement results are not affected and a true measurement with respect to tension or pressure is always carried out. Indeed, if there is any lean as a result of friction, lateral forces will also act on the weighing element, as a result of which the measurement will become inaccurate. Said linear contact is preferably realised in that the convex supporting surface of the one body is spherical and rests on an edge of the recess in the supporting surface of the other body. Futhermore, the recess in the supporting surface of one of the bodies can be made concave.

By this means an efficient support for a weighing element is provided which has a particularly small number of components and a low construction height and with which it is possible to compensate for a lean of at least 10° and even of 30°. Reliable operation is ensured as a result of the small number of components and the preferably linear sliding contact.

If, according to a preferred embodiment, the other body is provided with a central opening for passing through a tension rod connected to the weighing element, a construction can be obtained which is particularly versatile in use. Thus, it is possible to fit a corresponding adjustable support at the other side of the tension rod and to connect said adjustable support by means of a beam construction to a load positioned above the weighing element. A construction of this type can, for example, be used in lorries. Another possibility is to use a weighing hook or the like. In this case the support is connected by means of a bush construction to the component above it, which bears the load.

The invention will be illustrated in more detail below with the aid of various non-limiting embodiments, with reference to the accompanying drawings. On said drawings:
Fig. 1 shows a cross-sectional side view of an adjustable supporting device according to the present invention, on which a weighing element, shown in side view, is supported;
Fig. 2 shows a view corresponding to Fig. 1 of a variant of the supporting device;
Fig. 3 shows a partially cross-sectional side view of a further embodiment of the supporting device according to the invention with a weighing element, in side view, supported thereon;
Fig. 4 shows the use of the construction according to the invention in the horizontal position in a lorry;
Fig. 5 shows the construction according to Fig. 4 in a somewhat inclined position; and
Fig. 6 shows a weighing hook.

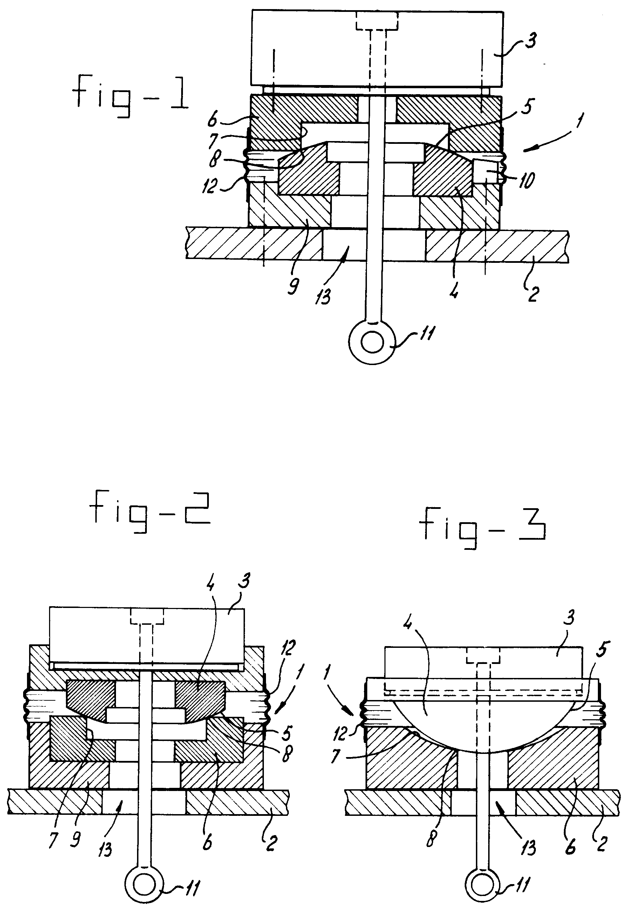

Fig. 1 shows a supporting device 1 according to the invention, fitted on a base plate 2, for example the frame of the tailboard of a lorry. A weighing element 3, in this case a "ring weighing cell" which is marketed by Mettler-Toledo, the Netherlands, is supported on the supporting device 1.

The supporting device 1 comprises a body 4, which has a convex supporting surface 5, and a body 6, which has a recess 7. The convex supporting surface 5 of the body 4 is spherical in shape and the body 6 is supported thereon by means of the peripheral edge 8 of the recess 7. By this means essentially linear contact is produced between the bodies 4 and 6, said linear contact being annular. The body 6 is thus able to slide, by means of the edge 8, with low friction over the supporting surface 5 of the body 4, in order thus to assume an inclined position with respect to the base 2. The body 4 is accommodated in a nesting component 9, on which stops 10 (one of which can be seen in Fig. 1) are placed. The extent of adjustment of the supporting device 1 is delimited by said stop 10. A tension pin 11, which is connected to the weighing element 3, projects through holes 13 in the supporting device 1 and the base 2. The sliding surfaces of the bodies 4 and 6 are kept dust-free by means of a seal 12.

Fig. 2 shows a variant of Fig. 1. In this embodiment the body 4 rests with its convex spherical supporting surface 5 on the edge 8 of the recess 7 of the body 6. Apart from that, the stops 10 are not fitted in this case.

Fig. 3 shows yet a further variant of the supporting device. The recess 7 in the body 6 is concave in shape. Both the convex supporting surface 5 of the body 4 and the concave recess 7 of the body 6 are spherically shaped. With this arrangement the radius of the spherical surface 5 is greater than that of the spherical surface 7. In this case also, the bodies 4, 6 make mutual linear contact.

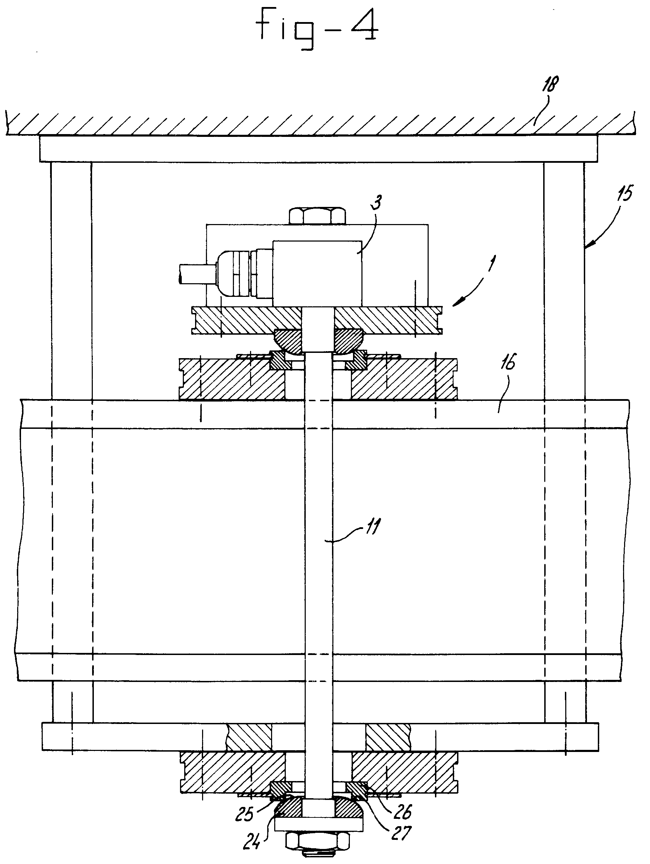

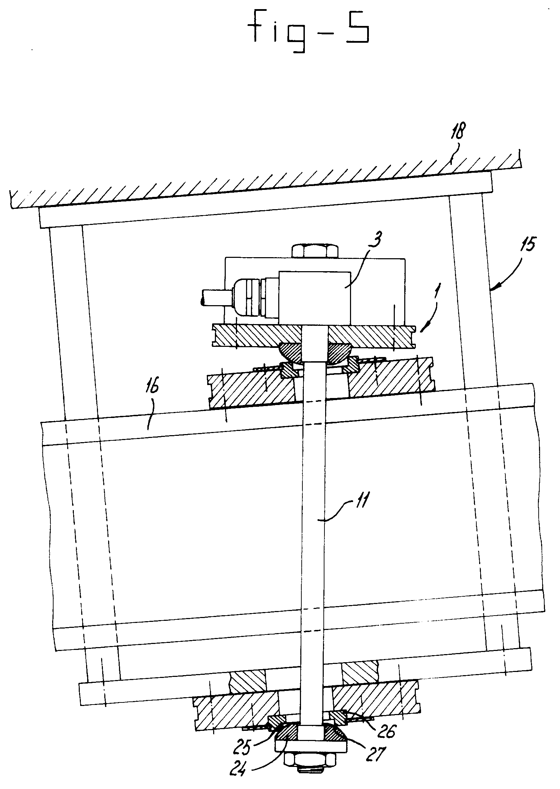

A further embodiment of the invention is shown in Figs. 4 and 5. This embodiment can be used, for example, in the case of a lorry chassis. Said chassis is indicated by 16. A load, such as a tank, indicated by 18, is placed on said chassis. Frequently it is desirable to determine the weight of the load 18 present on the chassis 16. To this end it is proposed, according to the invention, to use the device 1 shown in Figs. 1 to 3. With this arrangement the free end of the tension rod 11 is connected to a beam, indicated by 15. Said beam extends in precisely the opposite direction to tension rod 11 and is of a length such that load 18 is placed above device 1. Beam 15 is connected to tension rod 11 by means of an installation which corresponds to that shown in Figs. 1-3. In Figs. 4 and 5, 24 indicates one body and 26 the other body. Body 26 is provided with a recess 27, whilst body 24 is of convex shape. In this case also, linear engagement between the two bodies is essential in order to prevent friction as far as possible.

Fig. 5 shows the construction according to Fig. 4 when the chassis 16 is in an inclined position. As a result of the low, negligible friction between the bodies 4 and 6, and 24 and 26, tension rod 11 will be vertical, so that weighing element or load cell 3 is always loaded solely with respect to tension or pressure.

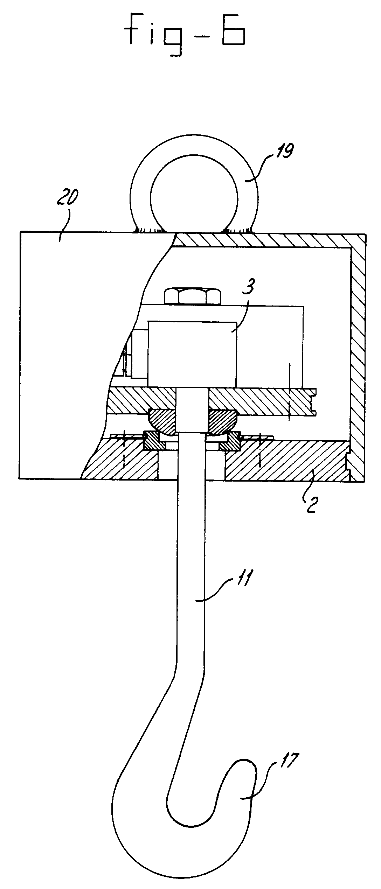

Fig. 6 shows a further possible application of the construction according to the invention. In this figure the support 2 is coupled directly to a bush 20. A pull ring 19 is fixed to bush 20, whilst tension rod 11 is provided at its end with a hook 17. As pull ring 19 is connected to a cable or the like, a lateral force will not be introduced from that side. Because of the shape of hook 17, a lateral force will not be introduced at this location either, and weighing element 3 will therefore always be loaded solely with respect to tension or pressure.

It is clear from the above that a compact supporting installation is provided which comprises a small number of components which are able to provide reliable adjustment of the weighing element, a large degree of adjustment being permissible. In this context it is pointed out that the invention is not restricted to the variants shown in the figures and that, for example, characteristics of the various illustrative embodiments can be combined with one another to give other embodiments. It is also possible to use any other bearing construction in place of sliding. The invention is therefore further defined by the appended claims.

## Claims

1. Device for adjustably supporting a weighing element, characterised in that said device is provided with a body (4) which has a convex-shaped supporting surface (5) and with a body (6) provided with a supporting surface which has a recess (7), said bodies (4, 6) being slidably supported on one another by means of the supporting surfaces and making contact with one another along a single peripheral line, the weighing element (3) being installed on one of the bodies (4, 6) away from the boundary surface between said bodies and the other of the said bodies (6, 4) being connected to a support.

2. Device according to Claim 1, characterised in that the recess (7) in the supporting surface of the body (6) is made concave.

3. Device according to one of the preceding claims, characterised in that the convex supporting surface (5) of the one body (4) is spherical and rests on an edge (8) of the recess (7) in the supporting surface of the other body (6).

4. Device according to one of the preceding claims, characterised in that one or more stops (10) are fitted to restrict the extent to which the bodies (4, 6) are able to move with respect to one another.

5. Device according to one of the preceding claims, characterised in that the other body (6, 4) is provided with a central opening (13) for passing through a tension rod (11) connected to the weighing element (3).

6. Device according to Claim 5, characterised in that a beam (15) is fixed to the free end of tension rod (11), which beam extends in the opposite direction to the tension rod (11) to beyond the weighing element (3) and is connected at that location to a load (18).

7. Device according to Claim 6, wherein the connection between the free end of the tension rod (11) and the beam (15) comprises a body (24), which has a convex-shaped supporting surface (25), and a body (26) provided with a supporting surface which has a recess (27), the bodies (24, 26) being slidably supported on one another by means of the supporting surfaces and making contact with one another along a single peripheral line.

8. Device according to Claim 5, wherein the support (2) is connected to a bush-shaped component (20) provided with gripping means (21).
